# FASCICULE DE BREVET EUROPEEN

(11) **EP 0 934 109 B1**
(45) Date de publication et mention de la délivrance du brevet: **02.05.2003**
(21) Numéro de dépôt: 97910485.8
(22) Date de dépôt: 15.10.1997
(51) Int. Cl.: B01F 17/00, C11D 3/00

(54) **COMPOSITIONS ANTI-MOUSSE ET PROCEDE DE PREPARATION**
ENTSCHÄUMERZUSAMMENSETZUNGEN UND VERFAHREN ZUR HERSTELLUNG
ANTIFOAM COMPOSITIONS AND METHOD OF PRODUCING

(30) Priorité: 22.10.1996 FR 9612819
(43) Date de publication de la demande: 11.08.1999
(60) Demande divisionnaire: 00203104.5
(73) Titulaire: SOCIETE D'EXPLOITATION DE PRODUITS POUR LES INDUSTRIES CHIMIQUES, S.E.P.P.I.C., 75321 Paris Cédex 07 (FR)
(72) Inventeur: MILIUS, Alain, F-06000 Nice (FR); BOITEUX, Jean-Pierre, F-81710 Saix (FR); CARRAUSSE, Maryse, F-81100 Castres (FR)
(74) Mandataire: Conan, Philippe Claude
(86) Numéro de dépôt international: FR9701840
(87) Numéro de publication internationale: WO98017379

(56) Documents cités:
- WO-A-91/03538
- WO-A-91/14760
- DE-A- 3 835 199

## Description

La présente invention concerne des compositions anti-mousse.

Certaines opérations de nettoyage industriel telles que le nettoyage des bouteilles ou le nettoyage en place peuvent entraîner la formation d'une mousse importante. Elle est notamment due à la présence de salissures alimentaires ou de résidus de colle présents sur les bouteilles. En vue de diminuer, voire d'empêcher la formation de cette mousse, il est connu d'ajouter à la composition nettoyante un ou plusieurs tensioactifs démoussants. Ces tensioactifs démoussants sont généralement du type non-ionique.

Un des objets de la présente invention consiste en de nouvelles compositions tensioactives dérivés des alkylpolyglycosides.

Les alkylpolyglycosides sont des tensioactifs non-ioniques bien connus. Leur procédé de fabrication est par exemple décrit dans la demande de brevet EP-A-0 077 167.

Toutefois, à ce jour, il est impossible d'utiliser des compositions tensioactives à base d'alkylpolyglycosides qui soient exemptes d'eau ou exemptes d'alcool gras. En effet, les températures de fusion très élevées des alkylpolyglycosides ne permettent pas de les manipuler sous forme anhydre. Ils sont donc dilués dans l'eau ou présentés en mélange avec un ou des alcools gras.

La demande de brevet EP-A-0 489 777 décrit des compositions anti-mousse comprenant des alkylpolyglycosides dont la chaîne alkyle comprend de 6 à 12 atomes de carbone.

La demande internationale de brevet WO 91/14760 décrit un mélange peu moussant d'alkylpolyglycosides et d'alcools gras polyalkoxylés éventuellement bloqués par des restes alkyles C₁ à C₁₀.

La demande de brevet allemand n° DE 38 35 199 décrit des alkylpolyglycosides bloqués par un radical arylméthyle ou alkyle présentant des propriétés anti-mousse.

Cependant, il est clair pour l'homme du métier que la réaction de blocage mise en oeuvre dans cette publication ne peut pas s'appliquer aux nombreux réactifs de blocage qui se décomposent dans l'eau. Dans un autre aspect de la présente invention, la Demanderesse a donc cherché à développer un nouveau procédé de blocage qui passe par des intermédiaires anhydres et exempts d'alcools gras.

L'invention a donc pour objet la composition (A) comprenant :
a) au moins un composé de formule (I)

   (Z)_{y}-(G)ₓ-O-R_{A} (I)
b) au moins un composé de formule (II)

   Z-O-[CH₂-CH(R₁)-O]ₙ-R_{B} (II)
c) éventuellement un ou plusieurs composés de formule (III)

   (G)ₓ-O-R_{A} (III) (III)

   et
d) éventuellement un ou plusieurs composés de formule (IV)

   HO-[CH₂-CH(R₁)-O]ₙ-R_{B} (IV)

   telle que le rapport pondéral entre le composé de formule (I) et le composé de formule (II) est compris entre 0,1 et 10, le rapport pondéral : composé de formule (III)/composé de formule (I) est compris entre 0 et 1 et
   le rapport pondéral : composé de formule (IV)/composé de formule (II) est compris entre 0 et 1, formules (I), (II), (III) et (IV) dans lesquelles :
   Z représente :
      soit un groupe -CH(CH₃)-O-R₂ dans lequel R₂ représente un radical hydrocarboné aliphatique linéaire ou ramifié saturé ou insaturé comportant de 1 à 30 atomes de carbone,
      soit un radical -CH₂-CH(OH)-R₃ dans lequel R₃ représente un radical alkyle linéaire ou ramifié comportant de 1 à 4 atomes de carbone ;
   y représente un nombre décimal supérieur à 0 et inférieur ou égal à 3x+1 ;
   x représente un nombre décimal compris entre 1 et 5 ;
   n est un nombre entier compris entre 1 et 30 ;
   R₁ représente un atome d'hydrogène ou un radical méthyle ;
   G représente le reste d'un saccharide ;
   R_{A} et R_{B} représentent indépendamment l'un de l'autre un radical hydrocarboné, linéaire ou ramifié, saturé ou insaturé, comprenant de 1 à 30 atomes de carbone.

Lorsque Z représente un groupe -CH(CH₃)-OR₂, il s'agit notamment du radical 1-méthoxy éthyle, 1-éthoxy éthyle, 1-propoxy éthyle, 1-isopropoxy éthyle, 1-butoxy éthyle, 1-isobutoxy éthyle, 1-(pentyloxy) éthyle, 1-(dodécyloxy) éthyle ou 1-(octadécyloxy) éthyle.

Lorsque Z représente un radical -CH₂-CH(OH)-R₃, il s'agit notamment du radical 2-hydroxybutyle.

Par radical hydrocarboné, linéaire ou ramifié, saturé ou insaturé, comprenant de 1 à 30 atomes de carbone, on désigne notamment pour R_{A} et/ou R_{B} les radicaux alkyles ou les radicaux alkènyle.

Par reste d'un saccharide, on désigne pour G un radical bivalent résultant de l'enlèvement sur une molécule de sucre, d'une part d'un atome d'hydrogène d'un groupe hydroxyle et d'autre du groupe hydroxyle anomérique.

Le terme saccharide désigne notamment le glucose ou dextrose, le fructose, le mannose, le galactose, l'altrose, l'idose, l'arabinose, le xylose, le ribose, le gulose, le lyxose, le saccharose, le maltose, le maltotriose, le lactose, le cellobiose, le dextrane, le talose, l'allose, le raffinose, le lévoglucosane, la cellulose ou l'amidon.

La structure oliogomérique (G)ₓ peut se présenter sous toute forme d'isomérie, qu'il s'agisse d'isomérie optique, d'isomèrie géométrique , ou d'isomérie de position ; elle peut aussi représenter un mélange d'isomères. Dans les formules (I) et (III) telles que définies précédemment, le groupe O-R_{A} est lié à G par le carbone anomérique de manière à former une fonction acétal.

Dans les définitions des formules (II) et (IV), le groupe -[CH₂-CH(R₁)-O]ₙ indique qu'il peut s'agir soit d'une chaîne composée uniquement de groupes éthoxyle (R₁=H), soit d'une chaîne composée uniquement de groupes propoxyle (R₁=CH₃), soit d'une chaîne composée à la fois de groupes éthoxyle et propoxyle. Dans ce dernier cas, les fragments - CH₂-CH₂O et -CH₂-CH(CH₃)-O sont distribués de manière séquencée ou aléatoire.

Dans la formule (I) telle que définie précédemment, le ou les groupes Z sont liés à (G)ₓ par un atome d'oxygène d'une de ses fonctions hydroxyle.

Lorsque dans la composition telle que définie précédemment, il y a plusieurs composés de formules (I), (II) (III) et/ou (IV), ils se différencient entre eux par les définitions de R_{A} et R_{B} et, éventuellement, dans le cas de produits de formule (I) par les valeurs de y.

Dans une première variante préférée de la présente invention G représente le reste du glucose, x, qui représente le degré moyen de polymérisation du saccharide est compris entre 1,05 et 2,5 et notamment entre 1,1 et 2,0 et y est inférieur ou égal à 2.

Constitue une deuxième variante préférée de la présente invention, la composition telle que définie précédemment pour laquelle les rapports pondéraux : composé de formule (III)/composé de formule (I) et composé (IV)/composé de formule (II) sont égaux à 0 ; dans ce cas, elle ne comprend donc ni composé de formule (III), ni composé de formule (IV).

Dans une troisième variante préférée de la présente invention, dans les formules (II) et (IV), n est inférieur ou égal à 15.

Dans une quatrième variante préférée de la présente invention, dans les formules (I), (II), (III) et (IV), R_{A} et R_{B} comportent, indépendamment l'un de l'autre de 6 à 18 atomes de carbone et représentent notamment un radical hexyle, heptyle, octyle, nonyle, décyle, undécyle, dodécyle, tridécyle, tétradécyle, hexadécyle, octadécycle, octadécényle, octadécadiènyle ou octadécatriènyle, lesdits radicaux étant linéaires ou ramifiés.

Dans une cinquième variante préférée de la présente invention, dans les formules (I) et (II), Z représente un groupe 1-(octadécyloxy) éthyle, 1-isobutoxy éthyle ou 2-hydroxybutyle.

L'invention a particulièrement pour objet la composition telle que décrite précédemment, comprenant un ou plusieurs composés de formules (I), un ou plusieurs composés de formules (II), éventuellement un ou plusieurs composés de formules (III) et, éventuellement, un ou plusieurs composés de formules (IV) pour laquelle dans les formules (I), (II), (III) et (IV), les substituants R_{A} et R_{B} sont identiques et représentent un radical octyle, nonyle, décycle ou 2-éthylhexyle.

L'invention a aussi pour objet un procédé de préparation de la composition (A) telle que définie précédemment caractérisé en ce que le sucre de formule (V)

H-G-OH. (V).

est mis en réaction en milieu acide avec un excès d'au moins un alcool de formule (VI)

HO-R_{A} (VI)

pour former le mélange (B) comprenant au moins un composé de formule (III) et le mélange en excès d'au moins un alcool de formule (VI), mélange (B) auquel est ajouté au moins un composé de formule (IV) dans un rapport pondéral composés de formule (III)/composés de formules (IV) compris entre 0,1 et 10 pour former un mélange (C) qui est neutralisé puis soumis à une étape de distillation pour éliminer l'excès d'alcool de formule (VI) et former ainsi la composition (D) anhydre comprenant au moins un composé de formule (III) et au moins un composé de formule (IV), composition anhydre (D) qui est mis à réagir avec un composé capable de réagir avec une ou plusieurs fonctions hydroxyles du groupe (G)ₓ, pour conduire à la composition (A).

Dans une variante du procédé décrit ci-dessus, lorsque R_{A} représente le radical dérivé d'un alcool gras, le composé de formule (III) peut être obtenu en préparant d'abord un alkylpolyglycoside avec un alcool léger tel que le méthanol ou le butanol par éthérification de l'ose correspondant puis, dans une deuxième étape, en effectuant une transéthérification avec l'alcool de formule (VI) et en distillant l'alcool léger.

Par composé de formules (VII) on désigne notamment les époxydes tels que par exemple l'oxyde de butylène, les éthers d'alkyle et de vinyle tels que par exemple l'isobutylvinyléther ou l'octadécylvinyléther.

Dans une autre variante préférée du procédé tel que décrit plus haut, le glucose est mélangé à une coupe d'alcools gras correspondant à un mélange d'alcools de formules (VI) pour former le mélange correspondant (B₁) d'alkyl polyglucosides de formules (III₁), correspondant à des composés de formules (III) dans lesquelles G représente le reste du glucose et de l'excès de la coupe d'alcools gras, mélange (B₁) auquel est ajouté un mélange de composés alkoxylés de formules (IV₁), préparé à partir de la même coupe d'alcools gras dans un rapport pondéral composés de formule (III₁)/composés de formules (IV₁) compris entre 0,2 et 5 pour former un mélange (C₁) qui est neutralisé puis soumis à une distillation pour former la composition anhydre (D₁) comprenant un mélange de composés de formules (III₁)

(G₁)ₓ-O-R_{A} (III₁)

dans lesquelles G₁ représente le reste du glucose et un mélange de composés alkoxylés de formule (IV₁)

HO-[CH₂-CH(R₁)-O]ₙ-R_{A} (IV₁),

composition anhydre (D₁) qui est mise à réagir avec un alkyl vinyl éther pour former la composition (A₁) comprenant :
a) un mélange de composés de formule (I₁)

   [R₂-O-CH(CH₃)]_{y}-[(G₁)ₓ-O-R_{A}] (I₁)
b) un mélange de composés de formule (II₁)

   R₂-O-CH(CH₃)-O-[CH₂-CH(R₁)-O]ₙ-R_{A} (II₁)
c) éventuellement un mélange de composés de formule (III₁)

   (G₁)ₓ-O-R_{A} (III₁)

   et
d) éventuellement un mélange de composés de formule (IV₁)

   HO-[CH₂)-CH(R₁)-O]ₙ-R_{A} (IV₁).

Dans une autre variante préférée, D₁ est mise à réagir avec l'oxyde de butylène pour donner la composition finale (A₂) comprenant :
a) un mélange de composés de formules (I₂)

   [CH₃-CH₂-CH(OH)-CH₂]_{y}-[(G₁)ₓ-O-R_{A}] (I₂)
b) un mélange de composés de formules (II₂)

   CH₃-CH₂-CH(OH)-CH₂-O-[CH₂-CH(R₁)-O]ₙ-R_{A} (II₂)
c) éventuellement un mélange de composés de formules (III₁)

   (G₁)ₓ-O-R_{A} (III₁)

   et
d) éventuellement un mélange de composés de formules (IV₁)

   HO-[CH₂-CH(R₁)-O]ₙ-R_{A} (IV₁).

Les composés de formules (VI) sont connus de l'homme du métier et disponibles dans le commerce. Les coupes d'alcools gras sont elles aussi connues de l'homme du métier ; certaines sont disponibles dans le commerce ou peuvent être obtenues selon des méthodes classiques à partir de graisses ou d'huiles naturelles telles que par exemple, l'huile de coprah, l'huile de palmiste, l'huile de palme, l'huile de soja, l'huile de colza, l'huile de ricin, le suif de boeuf ou l'huile de hareng.

Les composés alkoxylés de formules (IV) sont disponibles dans le commerce ou obtenus par action de l'oxyde d'éthylène et/ou l'oxyde de propylène sur les alcools correspondants selon des méthodes classique connues de l'homme du métier.

la composition (A), objet de l'invention est tensioactive et elle présente aussi des propriétés anti-mousse intéressantes. Cette propriété rend son utilisation possible dans de nombreux types d'industrie.

Dans l'industrie agro-alimentaire, ces produits peuvent être utilisés dans le nettoyage et la désinfection des récipients pouvant se trouver au contact des denrées alimentaires ; ils peuvent être aussi utilisés comme anti-mousse dans les industries agro-alimentaires d'extraction telles que les sucreries ou les amidonneries, dans les industries de fermentation telles que les usines de production d'acides aminés, d'acides organiques ou d'enzymes et dans les industries des aliments du bétail.

De manière générale, la composition (A) selon l'invention peut être utilisée dans le nettoyage des surfaces dures.

Ces produits peuvent enfin être utilisés dans les formulations détergentes à usage domestique telles que les produits d'entretien ménagers.

Chacune des utilisations citées précédemment représente en elle-même un aspect de la présente invention.

Une composition anti-mousse selon l'invention peut se présenter sous forme concentrée ou diluée, prête à l'emploi.

Lorsqu'elle se présente sous forme concentrée, elle peut comprendre de 5 à 70 % en poids d'au moins un composé de formule (I) et de 5 à 70 % en poids d'au moins un composé de formule (II).

Lorsqu'elle se présente sous forme diluée, elle peut comprendre de 0,004 % à 20 % en poids d'au moins un composé de formule (I) et de 0,004 % à 20 % en poids d'au moins un composé de formule (II).

Selon un autre aspect de l'invention, une composition nettoyante comprend de 2 à 50 % en poids d'un ou plusieurs agents alcalins tels que par exemple la soude ou la potasse et entre 0,001 et 10 % en poids de la composition (A) telle que définie précédemment.

Les exemples suivants illustrent l'invention sans toutefois la limiter.

### Exemple de préparation d'une composition selon l'invention

### A) Préparation d'une composition D

a) on fait réagir un mélange d'alcools gras comprenant 50 % en poids d'octanol et 50 % en poids de décanol avec du glucose monohydraté dans un rapport molaire alcools/glucose = 2,6/1, en catalyse acide. On obtient un mélange de 55 % en poids d'APG en C₈-C₁₀ ayant un degré de polymérisation égal à environ 1,9 et de 45 % d'alcools gras libre.
b) On fait réagir un mélange d'alcools gras comprenant 50 % en poids d'octanol et 50 % de décanol avec de l'oxyde d'éthylène puis de l'oxyde de propylène de façon à obtenir sur chacun des alcools une pentaéthoxylation puis une tétrapropoxylation.
c) On prépare ensuite un mélange comportant environ 1/3 d'alcool polyalkoxylés préparés au stade b) et 2/3 du mélange APG + alcool gras préparé au stade a) ; le mélange est neutralisé jusqu'à pH = 5,6 puis les alcools gras éliminés par distillation.

On obtient ainsi une composition anhydre (D₁ₐ) APG/alcools polyalkoxylés ayant un indice d'OH égal à 471 correspondant à une composition (D₁) dans laquelle, pour les formules (III₁) et (IV₁),
G représente un reste du glucose
x est égal à 1,9
R_{A} représente un radical octyle ou un radical décyle,
n est égal à 9, et,
R₁ représente un atome d'hydrogène ou un radical méthyle

En opérant d'une manière analogue à l'exemple A à partir d'une coupe d'alcools en C₁₂-C₁₆ dans un rapport molaire avec le glucose de 4/1 et une alkoxylation à 6 moles d'oxyde d'éthylène, on a préparé la composition anhydre (D_{1b}) APG/alcools polyalkoxylés, correspondant à une composition (D₁) dans laquelle pour les formules (III₁) et (IV₁),
G représente un reste du glucose
x est égal à 1,45
R_{A} représente un radical dodécyle, un radical tétradécyle ou un radical hexadécyle
m est égal à 6 et
R₁ représente un atome d'hydrogène

### B) Préparation de compositions (A)

a) blocage par des éthers d'alkyle et de vinyle.
   La composition anhydre (D₁ₐ) obtenue au stade A est additionnée de vinyl isobutyl éther en 1 heure à 80°C dans un rapport de 0,6 mole/mole de tensioactif, en présence d'une quantité catalytique d'acide phosphorique concentré. Après 5 heures à 110°C, on obtient la composition (A₁ₐ) recherchée ; Indice d'OH (I_{OH}) = 319 ; point de trouble(10 % butylediglycol (BDG)) : 57,5°C.
   En opérant de manière analogue avec 0,9 mole/mole de vinyl isobutyl éther, on obtient la composition (A_{1b}) ; I_{OH} = 273,9 ; point de trouble (10 % BDG) = 50°C
   En opérant de manière analogue avec 1,2 mole/mole de vinyl isobutyl éther, on obtient la composition (A_{1c}) ; I_{OH} = 231,4, point de trouble (10 % BDG) = 41°C.
   En opérant de manière analogue avec 0,6 mole/mole de vinyl octadécyl éther, on obtient la composition (A_{1d}) ; I_{OH} = 272,4.
b)blocage à l'oxyde de butylène
   On opère en présence de méthylate de sodium dans le méthanol à 125°C avec 0,6 mole/mole d'oxyde de butylène pendant 12 heures; on obtient la composition (A₂ₐ) ; I_{OH} = 416 ; point de trouble (1 % eau) = 47°C.
c) Analyse des propriétés anti-mousse des compositions selon l'invention.
   (i) on a préparé différentes solutions comprenant (% en poids) :
      - la composition tensioactive 0,012
      - base alcaline à 10 % 3
      - lait en poudre Régilait® en dispersion à 10 % 7,5
      - eau désionisée q.s.p 100,
      la base alcaline comprenant (% en poids) :
      tripolyphosphate de sodium : 3,5
      métasilicate de sodium 5H₂O : 4,2
      carbonate de sodium anhydre : 2,3
      eau désionisée q.s.p. 100,
   (ii)on a soumis la solution à une agitation rotative, pendant trois minutes et on a mesuré la hauteur de mousse (en mm) formée, après un repos de 5 secondes. L'agitation était telle qu'une solution similaire, mais ne comprenant pas de tensioactif démoussant, formait une mousse d'une hauteur de 30 mm.

On a obtenu les résultats suivants :

| A anti-mousse | hauteur de mousse (mm) |
|---|---|
| A₁ₐ | 16 |
| A_{1b} | 9 |
| A_{1c} | 9 |
| A_{1d} | 14 |
| A₂ₐ | 22 |
| Sans anti-mousse | 30 |

Ces résultats démontrent bien les propriétés anti-mousse des compositions selon l'invention.

## Revendications

1. Composition (A) comprenant :
a) au moins un composé de formule (I)
(Z)_{y}-(G)ₓ-O-R_{A} (I)
b) au moins un composé de formule (II)
Z-O-[CH₂-CH(R₁)-O]ₙ-R_{B} (II)
c) éventuellement un ou plusieurs composés de formule (III)
(G)ₓ-O-R_{A} (III)
et
d) éventuellement un ou plusieurs composés de formule (IV)
HO-[CH₂-CH(R₁)-O]ₙ-R_{B} (IV)
telle que le rapport pondéral entre le composé de formule (I) et le composé de formule (II) est compris entre 0,1 et 10, le rapport pondéral : composé de formule (III)/composé de formule (I) est compris entre 0 et 1 et
le rapport pondéral : composé de formule (IV)/composé de formule (II) est compris entre 0 et 1, formules (I) (II)(III) et (IV) dans lesquelles :
Z représente :
soit un groupe -CH(CH₃)-O-R₂ dans lequel R₂ représente un radical hydrocarboné aliphatique linéaire ou ramifié saturé ou insaturé comportant de 1 à 30 atomes de carbone,
soit un radical -CH₂-CH(OH)-R₃ dans lequel R₃ représente un radical alkyle linéaire ou ramifié comportant de 1 à 4 atomes de carbone.
y représente un nombre décimal supérieur à 0 et inférieur ou égal à 3x+1.
x représente un nombre décimal compris entre 1 et 5.
n est un nombre entier compris entre 1 et 30
R₁ représente un atome d'hydrogène ou un radical méthyle.
G représente le reste d'un saccharide,
R_{A} et R_{B} représentent indépendamment l'un de l'autre un radical hydrocarboné, linéaire ou ramifié, saturé ou insaturé, comprenant de 1 à 30 atomes de carbone.

2. Composition selon la revendication 1 pour laquelle dans les formules (I) et (III) G représente le reste du glucose, x est compris entre 1,05 et 2,5 et notamment entre 1,1 et 2,0 et y est inférieur ou égal à 2.

3. Composition selon l'une des revendications 1 ou 2, pour laquelle les rapports pondéraux : composé de formule (III)/composé de formule (I) et composé (IV)/composé de formule (II) sont égaux à 0.

4. Composition selon l'une des revendications 1 à 3 pour laquelle, dans les formules (II) et (IV), n est inférieur ou égal à 15.

5. Composition selon l'une des revendications 1 à 4 pour laquelle, dans les formules (I), (II), (III) et (IV), R_{A} et R_{B} comportent, indépendamment l'un de l'autre de 6 à 18 atomes de carbone et représentent notamment un radical hexyle, octyle, heptyle, nonyle, décyle, undécyle, dodécyle, tridécyle, tétradécyle, hexadécyle, octadécycle, octadécènyle, octadécadiènyle ou octadécatriènyle, lesdits radicaux étant linéaires ou ramifiés.

6. Composition selon l'une des revendications 1 à 5 selon laquelle les formules (I) et (II), Z représente un groupe 1-(octadécyloxy) éthyle, 1-isobutoxy éthyle ou 2-hydroxybutyle.

7. Composition selon la revendication 6 pour laquelle, dans les formules (I), (II), (III) et (IV), les substituants R_{A} et R_{B} sont identiques et représentent un radical octyle, nonyle, décycle ou 2-éthyl-héxyle.

8. Procédé de préparation de la composition (A) telle que définie à l'une des revendications 1 à 7, **caractérisé en ce que** le sucre de formule (V)
H-G-OH (V)
est mélangé en milieu acide à un excès d'au moins un alcool de formule (VI)
HO-R_{A} (VI)
pour former le mélange (B) comprenant au moins un composé de formule (III) et le mélange en excès d'au moins un alcool de formule (VI), mélange (B) auquel est ajouté au moins un composé de formule (IV) dans un rapport pondéral composés de formule (III)/composés de formules (IV) compris entre 0,1 et 10 pour former un mélange (C) qui est neutralisé puis soumis à une étape de distillation pour éliminer l'excès d'alcool de formule (VI) et former ainsi la composition (D) anhydre comprenant au moins un composé de formule (III) et au moins un composé de formule (IV), composition anhydre (D) qui est mis à réagir avec un composé capable de réagir avec une ou plusieurs fonctions hydroxyles du groupe (G)ₓ, pour conduire à la composition (A).

9. Procédé de préparation d'une composition (A₁) selon l'une des revendications 1 à 7 comprenant :
a) un mélange de composés de formule (I₁)
[R₂-O-CH(CH₃)]_{y}-[(G₁)ₓ-O-R_{A}] (I₁)
dans laquelle G₁ représente, comme reste de saccharide, le reste du glucose,
b) un mélange de composés de formule (II₁)
R₂-O-CH(CH₃)-O-[CH₂-CH(R₁)-O]ₙ-R_{A} (II₁)
c) éventuellement un mélange de composés de formule (III₁)
(G₁)ₓ-O-R_{A} (III₁)
et
d) éventuellement un mélange de composés de formule (IV₁) :
HO-(CH₂-CH(R₁)-O]ₙ-R_{A} (IV₁).
**caractérisé en ce que** le glucose est mélangé à une coupe d'alcools gras de formule (VI) : HO-R_{A} pour former le mélange correspondant (B₁) d'alkyl polyglucosides de formules (III₁) et de l'excès d'alcools gras de formule (VI), mélange (B₁) auquel est ajouté un mélange de composés alcoxylés de formules (IV₁), préparé à partir de la même coupe d'alcools gras de formule (VI), dans un rapport pondéral composés de formule (III₁) / composés de formules (IV₁) compris entre 0,2 et 5, pour former un mélange (C₁) qui est neutralisé puis soumis à une distillation pour former la composition anhydre (D₁) comprenant un mélange de composés de formules (III₁) et un mélange de composés alcoxylés de formule (IV₁), qui est mis à réagir avec un alkyl vinyl éther.

10. Procédé de préparation d'une composition (A₂) selon la revendication 6 comprenant :
a) un mélange de composés de formules (I₂)
[CH₃-CH₂-CH(OH)-CH₂]_{y}-[(G₁)ₓ-O-R_{A}] (I₂)
dans laquelle G₁ représente, comme reste de saccharide, le reste du glucose,
b) un mélange de composés de formules (II₂)
CH₃-CH₂-CH(OH) -CH₂-O-[CH₂-CH(R₁)-O]ₙ-R_{A} (II₂)
c) éventuellement un mélange de composés de formules (III₁) :
(G₁)ₓ-O-R_{A} (III₁)
et,
d) éventuellement un mélange de composés de formules (IV₁) :
HO-[CH₂-CH(R₁)-O]ₙ-R_{A} (IV₁),
**caractérisé en ce que** le glucose est mélangé à une coupe d'alcools gras de formules (VI) : HO-R_{A} pour former le mélange correspondant (B₁) d'alkyl polyglucosides de formules (III₁) et de l'excès d'alcools gras de formule (VI), mélange (B₁) auquel est ajouté un mélange de composés alcoxylés de formules (IV₁), préparé à partir de la même coupe d'alcools gras de formule (VI), dans un rapport pondéral composés de formule (III₁) / composés de formules (IV₁) compris entre 0,2 et 5, pour former un mélange (C₁) qui est neutralisé puis soumis à une distillation pour former la composition anhydre (D₁) comprenant un mélange de composés de formules (III₁) et un mélange de composés alcoxylés de formule (IV₁), qui est mis à réagir avec l'oxyde de butylène.

11. Utilisation de la composition (A) telle que définie à l'une des revendications 1 à 7 comme agent tensio-actif et notamment comme agent anti-mousse.

12. Utilisation selon la revendication 11 dans le nettoyage des surfaces dures telles que les sols ou les récipients se trouvant notamment au contact de denrées alimentaires.

13. Utilisation selon la revendication 12, lors des étapes de fermentation lors de la production industrielle d'acides aminés, d'acides organiques, d'enzymes ou d'aliments du bétail.

14. Composition nettoyante comprenant comme additif anti-mousse une composition (A) telle que définie à l'une des revendications 1 à 7.

15. Utilisation de la composition telle que définie à la revendication 14 pour le nettoyage domestique, le nettoyage des locaux ou le nettoyage industriel.

## Claims

1. Composition (A) comprising:
a) at least one compound of formula (I)
(Z)_{y}-(G)ₓ-O-R_{A} (I)
b) at least one compound of formula (II)
Z-O-[CH₂-CH(R₁)-O]ₙ-R_{B} (II)
c) optionally one or more compounds of formula (III)
(G)ₓ-O-R_{A} (III),
and
d) optionally one or more compounds of formula (IV)
HO-[CH₂-CH(R₁)-O]ₙ-R_{B} (IV)
such that the ratio by weight of the compound of formula (I) to the compound of formula (II) is between 0.1 and 10,
the ratio by weight: compound of formula (III)/compound of formula (I) is between 0 and 1, and
the ratio by weight: compound of formula (IV)/compound of formula (II) is between 0 and 1, in which formulae (I), (II), (III) and (IV):
Z represents:
either a -CH(CH₃)-O-R₂ group, in which R₂ represents a saturated or unsaturated, linear or branched, aliphatic hydrocarbon-comprising radical comprising from 1 to 30 carbon atoms,
or a -CH₂-CH(OH)-R₃ radical, in which R₃ represents a linear or branched alkyl radical comprising from 1 to 4 carbon atoms;
y represents a decimal number of greater than 0 and less than or equal to 3x+1;
x represents a decimal number of between 1 and 5;
n is an integer of between 1 and 30;
R₁ represents a hydrogen atom or a methyl radical;
G represent the residue of a saccharine;
R_{A} and R_{B} represent, independently of one another, a saturated or unsaturated, linear or branched, hydrocarbon-comprising radical comprising from 1 to 30 carbon atoms.

2. Composition according to Claim 1, in which, in the formulae (I) and (III), G represents the glucose residue, x is between 1.05 and 2.5 and in particular between 1.1 and 2.0, and y is less than or equal to 2.

3. Composition according to either of Claims 1 and 2, in which the ratios by weight: compound of formula (III)/compound of formula (I) and compound of formula (IV)/compound of formula (II) are equal to 0.

4. Composition according to one of Claims 1 to 3, in which n is less than or equal to 15 the formulae (II) and (IV).

5. Composition according to one of Claims 1 to 4, in which, in the formulae (I), (II), (III) and (IV), R_{A} and R_{B} comprise, independently of one another, from 6 to 18 carbon atoms and represent in particular a hexyl, octyl, heptyl, nonyl, decyl, undecyl, dodecyl, tridecyl, tetradecyl, hexadecyl, octadecyl, octadecenyl, octadecadienyl or octadecatrienyl radical, the said radicals being linear or branched.

6. Composition according to one of Claims 1 to 5, according to which, in the formulae (I) and (II), Z represents a 1-(octadecyloxy)ethyl, 1-isobutoxyethyl or 2-hydroxybutyl group.

7. Composition according to Claim 6, in which, in the formulae (I), (II), (III) and (IV), the substituents R_{A} and R_{B} are identical and represent an octyl, nonyl, decyl or 2-ethylhexyl radical.

8. Process for the preparation of the composition (A) as defined in one of Claims 1 to 7, **characterized in that** the sugar of formula (V)
H-G-OH (V)
is mixed in acidic medium with an excess of at least one alcohol of formula (VI)
HO-R_{A} (VI)
in order to form the mixture (B) comprising at least one compound of formula (III) and the mixture in excess of at least one alcohol of formula (VI), to which mixture (B) is added at least one compound of formula (IV) in a ratio by weight of compounds of formula (III) to compounds of formula (IV) of between 0.1 and 10, in order to form a mixture (C), which mixture is neutralized and then subjected to a distillation stage in order to remove the excess alcohol of formula (VI) and thus to form the anhydrous composition (D) comprising at least one compound of formula (III) and at least one compound of formula (IV), which anhydrous composition (D) is reacted with a compound capable of reacting with one or more hydroxyl functional groups of the (G)ₓ group, in order to result in the composition (A) .

9. Process for the preparation of a composition (A₁) according to one of Claims 1 to 7, comprising:
a) a mixture of compounds of formula (I₁)
[R₂-O-CH(CH₃)]_{y}-[(G₁)ₓ-O-R_{A}] (I₁)
in which G₁ represents, as saccharide residue, the glucose residue,
b) a mixture of compounds of formula (II₁)
R₂-O-CH(CH₃)-O-[CH₂-CH(R₁)-O]ₙ-R_{A} (II₁)
c) optionally a mixture of compounds of formula (III₁)
(G₁)ₓ-O-R_{A} (III₁),
and
d) optionally a mixture of compounds of formula (IV₁)
HO-[CH₂-CH(R₁)-O]ₙ-R_{A} (IV₁),
**characterized in that** the glucose is mixed with a fraction of fatty alcohols of formula (VI): HO-R_{A}, in order to form the corresponding mixture (B₁) of alkyl polyglucosides of formula (III₁) and of the excess of fatty alcohols of formula (VI), to which mixture (B₁) is added a mixture of alkoxylated compounds of formula (IV₁), prepared from the same fraction of fatty alcohols of formula (VI) in a ratio by weight of compounds of formula (III₁) to compounds of formula (IV₁) of between 0.2 and 5, in order to form a mixture (C₁), which mixture is neutralized and then subjected to a distillation in order to form the anhydrous composition (D₁) comprising a mixture of compounds of formula (III₁) and a mixture of alkoxylated compounds of formula (IV₁), which anhydrous composition is reacted with an alkyl vinyl ether.

10. Process for the preparation of a composition (A₂) according to Claim 6, comprising:
a) a mixture of compounds of formula (I₂)
[CH₃-CH₂-CH(OH)-CH₂]_{y}-[(G₁)ₓ-O-R_{A}] (I₂)
in which G₁ represents, as saccharide residue, the glucose residue,
b) a mixture of compounds of formula (II₂)
CH₃-CH₂-CH(OH)-CH₂-O-[CH₂-CH(R₁)-O]ₙ-R_{A} (II₂)
c) optionally a mixture of compounds of formula (III₁)
(G₁)ₓ-O-R_{A} (III₁),
and
d) optionally a mixture of compounds of formula (IV₁)
HO-[CH₂-CH(R₁)-O]ₙ-R_{A} (IV₁),
**characterized in that** the glucose is mixed with a fraction of fatty alcohols of formula (VI): HO-R_{A}, in order to form the corresponding mixture (B₁) of alkyl polyglucosides of formula (III₁) and of the excess of fatty alcohols of formula (VI), to which mixture (B₁) is added a mixture of alkoxylated compounds of formula (IV₁), prepared from the same fraction of fatty alcohols of formula (VI) in a ratio by weight of compounds of formula (III₁) to compounds of formula (IV₁) of between 0.2 and 5, in order to form a mixture (C₁), which mixture is neutralized and then subjected to a distillation in order to form the anhydrous composition (D₁) comprising a mixture of compounds of formula (III₁) and a mixture of alkoxylated compounds of formula (IV₁), which anhydrous composition is reacted with butylene oxide.

11. Use of the composition (A) as defined in one of Claims 1 to 7 as surface-active agent and in particular as antifoaming agent.

12. Use according to Claim 11 in the cleaning of hard surfaces, such as floors, or containers which are in particular in contact with foodstuffs.

13. Use according to Claim 12 during the fermentation stages during the industrial production of amino acids, organic acids, enzymes or livestock fodder.

14. Cleaning composition comprising, as antifoaming additive, a composition (A) as defined in one of Claims 1 to 7.

15. Use of the composition as defined in Claim 14 for household cleaning, office cleaning or industrial cleaning.

## Patentansprüche

1. Zusammensetzung (A), enthaltend:
a) mindestens eine Verbindung der Formel (I)
(Z)_{y}-(G)ₓ-O-R_{A} (I)
b) mindestens eine Verbindung der Formel (II)
Z-O-[CH₂-CH(R₁)-O]ₙ-R_{B} (II)
c) gegebenenfalls eine oder mehrere Verbindungen der Formel (III)
(G)ₓ-O-R_{A} (III)
und
d) gegebenenfalls eine oder mehrere Verbindungen der Formel (IV)
HO-[CH₂-CH(R₁)-O]ₙ-R_{B} (IV)
in solchen Mengen, daß das Gewichtsverhältnis zwischen der Verbindung der Formel (I) und der Verbindung der Formel (II) zwischen 0,1 und 10 liegt,
das Gewichtsverhältnis zwischen der Verbindung der Formel (III) und der Verbindung der Formel (I) zwischen 0 und 1 liegt und
das Gewichtsverhältnis zwischen der Verbindung der Formel (IV) und der Verbindung der Formel (II) zwischen 0 und 1 liegt, und in den Formeln (I), (II), (III) und (IV) :
Z
entweder für eine -CH(CH₃)-O-R₂-Gruppe, worin R₂ einen gesättigten oder ungesättigten, linearen oder verzweigten aliphatischen Kohlenwasserstoffrest mit 1 bis 30 Kohlenstoffatomen bedeutet,
oder für einen -CH₂-CH(OH)-R₃-Rest, worin R₃ einen linearen oder verzweigten Alkylrest mit 1 bis 4 Kohlenstoffatomen bedeutet, steht;
y für eine Dezimalzahl größer 0 und kleiner gleich 3x+1 steht;
x für eine Dezimalzahl zwischen 1 und 5 steht;
n für eine ganze Zahl zwischen 1 und 30 steht;
R₁ für ein Wasserstoffatom oder einen Methylrest steht;
G für einen Saccharidrest steht und
R_{A} und R_{B} unabhängig voneinander für einen gesättigten oder ungesättigten, linearen oder verzweigten Kohlenwasserstoffrest mit 1 bis 30 Kohlenstoffatomen stehen.

2. Zusammensetzung nach Anspruch 1, in der in den Formeln (I) und (III) G für einen Glucoserest steht, x zwischen 1,05 und 2,5 und insbesondere zwischen 1,1 und 2,0 liegt und y kleiner gleich 2 ist.

3. Zusammensetzung nach Anspruch 1 oder 2, in der die Gewichtsverhältnisse zwischen der Verbindung der Formel (III) und der Verbindung der Formel (I) und der Verbindung der Formel (IV) und der Verbindung der Formel (II) gleich 0 sind.

4. Zusammensetzung nach einem der Ansprüche 1 bis 3, in der in den Formeln (II) und (IV) n kleiner gleich 15 ist.

5. Zusammensetzung nach einem der Ansprüche 1 bis 4, in der in den Formeln (I), (II), (III) und (IV) R_{A} und R_{B} unabhängig voneinander 6 bis 18 Kohlenstoffatome enthalten und insbesondere für einen Hexyl-, Octyl-, Heptyl-, Nonyl-, Decyl-, Undecyl-, Dodecyl-, Tridecyl-, Tetradecyl-, Hexadecyl-, Octadecyl-, Octadecenyl-, Octadecadienyl- oder Octadecatrienylrest stehen, wobei diese Reste linear oder verzweigt sein können.

6. Zusammensetzung nach einem der Ansprüche 1 bis 5, in der in den Formeln (I) und (II) Z für eine 1-(Octadecyloxy)ethyl-, 1-Isobutoxyethyl- oder 2-Hydroxybutylgruppe steht.

7. Zusammensetzung nach Anspruch 6, in der in den Formeln (I), (II), (III) und (IV) die Substituenten R_{A} und R_{B} gleich sind und für einen Octyl-, Nonyl-, Decyl- oder 2-Ethylhexylrest stehen.

8. Verfahren zur Herstellung der Zusammensetzung (A) nach einem der Ansprüche 1 bis 7, **dadurch gekennzeichnet, daß** man den Zucker der Formel (V)
H-G-O (V)
in saurem Medium mit einem Überschuß mindestens eines Alkohols der Formel (VI)
HO-R_{A} (VI)
vermischt, wobei man die Mischung (B) erhält, welche mindestens eine Verbindung der Formel (III) und den Überschuß mindestens eines Alkohols der Formel (VI) enthält, die Mischung (B) mit mindestens einer Verbindung der Formel (IV) in einem Gewichtsverhältnis zwischen Verbindungen der Formel (III) und Verbindungen der Formel (IV) zwischen 0,1 und 10 versetzt, wobei man ein Gemisch (C) erhält, das Gemisch (C) neutralisiert und dann einem Destillationsschritt zur Abtrennung des Überschusses des Alkohols der Formel (VI) unterwirft, wobei man die wasserfreie Zusammensetzung (D) erhält, welche mindestens eine Verbindung der Formel (III) und mindestens eine Verbindung der Formel (IV) enthält, und die wasserfreie Zusammensetzung (D) mit einer Verbindung, die zur Reaktion mit einer oder mehreren Hydroxylfunktionen der Gruppe (G)ₓ befähigt ist, umsetzt, wobei man die Zusammensetzung (A) erhält.

9. Verfahren zur Herstellung einer Verbindung (A₁) nach einem der Ansprüche 1 bis 7, enthaltend:
a) ein Gemisch von Verbindungen der Formel (I₁)
[R₂-O-CH(CH₃)]_{y}-[(G₁)ₓ-O-R_{A}] (I₁)
worin G₁ als Saccharidrest für einen Glucoserest steht,
b) ein Gemisch von Verbindungen der Formel (II₁)
R₂-O-CH(CH₃)-O- [CH₂-CH(R₁)-O]ₙ-R_{A} (II₁)
c) gegebenenfalls ein Gemisch von Verbindungen der Formel (III₁)
(G₁)ₓ-O-R_{A} (III₁)
und
d) gegebenenfalls ein Gemisch von Verbindungen der Formel (IV₁)
HO-[CH₂-CH(R₁)-O]ₙ-R_{A} (IV₁);
**dadurch gekennzeichnet, daß** man die Glucose mit einem Schnitt von Fettalkoholen der Formel (VI) HO-R_{A} vermischt, wobei man die entsprechende Mischung (B₁) von Alkylpolyglucosiden der Formel (III₁) und dem Überschuß an Fettalkoholen der Formel (VI) erhält, die Mischung (B₁) mit einem ausgehend von dem gleichen Schnitt von Fettalkoholen der Formel (VI) hergestellten Gemisch von alkoxylierten Verbindungen der Formel (IV₁) in einem Gewichtsverhältnis zwischen Verbindungen der Formel (III₁) und Verbindungen der Formel (IV₁) zwischen 0,2 und 5 versetzt, wobei man ein Gemisch (C₁) erhält, das Gemisch (C₁) neutralisiert und dann einer Destillation unterwirft, wobei man die wasserfreie Zusammensetzung (D₁) erhält, welche ein Gemisch von Verbindungen der Formel (III₁) und ein Gemisch von alkoxylierten Verbindungen der Formel (IV₁) enthält, und die Zusammensetzung (D₁) mit einem Alkylvinylether umsetzt.

10. Verfahren zur Herstellung einer Verbindung (A₂) nach Anspruch 6, enthaltend:
a) ein Gemisch von Verbindungen der Formel (I₂)
[CH₃-CH₂-CH(OH)-CH₂]_{y}-[(G₁)ₓ-O-R_{A}] (I₂)
worin G₁ als Saccharidrest für einen Glucoserest steht,
b) ein Gemisch von Verbindungen der Formel (II₂)
CH₃-CH₂-CH(OH)-CH₂-O-[CH₂-CH(R₁)-O]ₙ-R_{A} (II₂)
c) gegebenenfalls ein Gemisch von Verbindungen der Formel (III₁)
(G₁)ₓ-O-R_{A} (III₁)
und
d) gegebenenfalls ein Gemisch von Verbindungen der Formel (IV₁)
HO-[CH₂-CH(R₁)-O]ₙ-R_{A} (IV₁);
**dadurch gekennzeichnet, daß** man die Glucose mit einem Schnitt von Fettalkoholen der Formel (VI) HO-R_{A} vermischt, wobei man die entsprechende Mischung (B₁) von Alkylpolyglucosiden der Formel (III₁) und dem Überschuß an Fettalkoholen der Formel (VI) erhält, die Mischung (B₁) mit einem ausgehend von dem gleichen Schnitt von Fettalkoholen der Formel (VI) hergestellten Gemisch von alkoxylierten Verbindungen der Formel (IV₁) in einem Gewichtsverhältnis zwischen Verbindungen der Formel (III₁) und Verbindungen der Formel (IV₁) zwischen 0,2 und 5 versetzt, wobei man ein Gemisch (C₁) erhält, das Gemisch (C₁) neutralisiert und dann einer Destillation unterwirft, wobei man die wasserfreie Zusammensetzung (D₁) erhält, welche ein Gemisch von Verbindungen der Formel (III₁) und ein Gemisch von alkoxylierten Verbindungen der Formel (IV₁) enthält, und die Zusammensetzung (D₁) mit Butylenoxid umsetzt.

11. Verwendung der Zusammensetzung (A) nach einem der Ansprüche 1 bis 7 als Tensid und insbesondere als Antischaummittel.

12. Verwendung nach Anspruch 11 bei der Reinigung von harten Oberflächen wie Fußböden oder Behältern, die insbesondere mit Lebensmitteln in Berührung stehen.

13. Verwendung nach Anspruch 12 bei den Fermentationsstufen bei der technischen Herstellung von Aminosäuren, organischen Säuren, Enzymen oder Viehfutter.

14. Reinigungszusammensetzung, die als Antischaumadditiv eine Zusammensetzung (A) nach einem der Ansprüche 1 bis 7 enthält.

15. Verwendung der Zusammensetzung nach Anspruch 14 zur Haushaltsreinigung, zur Reinigung von gewerblichen oder öffentlichen Räumlichkeiten oder zur industriellen Reinigung.
